Europäisches Patentamt

European Patent Office

Office européen des brevets

(19)

(11) Veröffentlichungsnummer : **0 077 032**
**B1**

(12) # EUROPÄISCHE PATENTSCHRIFT

(45) Veröffentlichungstag der Patentschrift :
28.05.86

(21) Anmeldenummer : 82109282.2

(22) Anmeldetag : 07.10.82

(51) Int. Cl.⁴ : **F 16 D 59/02**

(54) **Scheibenbremsmotor.**

(30) Priorität : 09.10.81 DE U 8129499

(43) Veröffentlichungstag der Anmeldung :
20.04.83 Patentblatt 83/16

(45) Bekanntmachung des Hinweises auf die Patenterteilung : 28.05.86 Patentblatt 86/22

(84) Benannte Vertragsstaaten :
AT BE CH DE FR GB IT LI LU NL SE

(56) Entgegenhaltungen :
DE-A- 1 475 359
DE-A- 2 257 290
DE-B- 1 130 521
DE-B- 1 625 671
FR-A- 2 390 636
FR-A- 2 432 117

(73) Patentinhaber : ABM Adam Baumüller GmbH Fabrik für Elektrotechnik in Marktredwitz
Friedenfelserstrasse 24
D-8590 Marktredwitz (DE)

(72) Erfinder : Fritsch, Hans, Ing. grad.
Steinwaldstrasse 26
D-8590 Marktredwitz (DE)
Erfinder : Erhardt, Wolfgang, Ing. grad.
Heidestrasse 17
D-8591 Tröstau (DE)
Erfinder : Bräutigam, Christoph, Ing. grad.
Am Damm 14
D-8598 Waldershof (DE)

(74) Vertreter : Tergau, Enno et al
Patentanwälte Tergau & Pohl Postfach 11 93 47
Hefnersplatz 3
D-8500 Nürnberg 11 (DE)

**Beschreibung**

Die Erfindung betrifft einen Scheibenbremsmotor mit den im Oberbegriff des Anspruches 1 aufgeführten Merkmalen. Solche Motoren sind beispielsweise aus DE-B-1 130 521 oder DE-B-1 625 671 bekannt. Die Integration der Bremsspule in das Lagerschild dieser herkömmlichen Motoren ermöglicht einen kurzen Abstand zwischen Lüfter und Motorgehäuse sowie eine günstige strömungstechnische Führung der Kühlluft, wodurch die Motorkühlung begünstigt wird. Ein weiterer Vorteil der Integration der Bremsspule im Lagerschild besteht darin, daß der Stromanschluß der Bremsspule direkt vom Lagerschild durch das Motorgehäuse hindurch zum Klemmkasten geführt werden kann. Dadurch wird eine Außenverkabelung erspart und bereits konstruktiv ein Schwallwasserschutz gewährleistet.

Durch den Einbau der Magnetspule in ein aus nichtmagnetischem Werkstoff gefertigtes Lagerschild wird lediglich der die Bremsspule tragende Magnetkörper magnetisiert. Eine Magnetisierung des gesamten, beispielsweise aus Aluminium bestehenden Lagerschildes ist nicht möglich. Außerdem zeichnet sich Aluminium gegenüber Stahl und Grauguß durch eine vierfach größere Wärmeleitfähigkeit aus. Die für die Motorkühlung vorteilhafte Möglichkeit der Axiallängen-Verringerung des in das Lagerschild inkorporierten Bremsenantriebes kann also voll ausgeschöpft werden, ohne eine Beeinträchtigung der Kühlung der Bremse in Kauf nehmen zu müssen. Die Bremse bleibt auch bei einer hohen Frequenz ihrer Schaltspiele und großer Bremsarbeit wegen der hohen Wärmeableitfähigkeit des Aluminiumwerkstoffes des Lagerschildes ausreichend gekühlt.

Aufgabe der Erfindung ist eine weitergehende Verbesserung der thermischen Belastbarkeit herkömmlicher Elektromotor-Scheibenbremsen. Diese Aufgabe wird durch die im Kennzeichen des Anspruches 1 enthaltenen Merkmale gelöst. Durch die haftschlüssige Einbettung des Magnetkörpers beim Druckgießen des Lagerschildes wird eine Verbindung zwischen diesen beiden Bauteilen geschaffen, durch die eine besonders schnelle Wärmeabfuhr aus dem kritischen Bereich der Bremsspule gewährleistet ist. Es ist für einen besonders guten Wärmeübergang zwischen dem Magnetkörper und dem Lagerschild gesorgt, wobei durch die Kombination dieser Verbindung mit der Verwendung von Aluminium für das Lagerschild eine weitere Verbesserung der thermischen Verhältnisse erzielt wird. Durch die Einbettung wird gleichzeitig ein fertigungstechnischer Vorteil erzielt.

Die Merkmale des Anspruches 2 begünstigen ebenfalls die Abfuhr der im Bereich des Bremsbelages besonders intensiv anfallenden Wärme. Hier wirkt sich wieder die hohe Wärmeleitfähigkeit des Aluminiumwerkstoffes gegenüber dem Graugußwerkstoff des Lüfters der bekannten Konstruktion aus. Zudem ist bekanntlich Aluminium leichter als Grauguß. Folglich ist das jeweils abzubremsende Schwungmoment auch geringer. Durch das Merkmal des Anspruches 3 ergibt sich eine vereinfachte Auswechselbarkeit des Bremsbelages. Darüber hinaus wirkt sich diese Art der Befestigung bei einem Bremsvorgang geräuschvermindernd aus. Dies beruht darauf, daß der Bremsbelag durch sein freies Anliegen am Lüfter ebenfalls als Dämpfungsglied wirkt. Diese Wirkungen werden durch die Merkmale des Anspruches 4 weiter begünstigt.

Das Merkmal des Anspruches 5 begünstigt die Auswechselbarkeit des Lüfterrades insbesondere zum Ersetzen eines verschlissenen Bremsbelages. Das Auswechseln kann in einfacher Weise vorgenommen werden, was durch die Merkmale der Ansprüche 6 und 7 noch weiter begünstigt wird.

Die Merkmale des Anspruches 8 führen zu einer Geräuschverminderung beim Einfallen der Bremse. Der durch die Merkmale des Anspruches 10 in einfacher Weise zu haltende Dichtungsring dient in beiden Schaltstellungen der Ankerscheibe als Staub- und Feuchtigkeitsabdichtung des Motors und der Bremse nach außen. Beim Lüften der Ankerscheibe wird der Dichtungsring komprimiert. Er verhindert ein metallisches Auftreffen den Ankerscheibe auf das Lagerschild und dient damit ebenfalls besonders zur Geräuschunterdrückung. Der in Lüftstellung komprimierte Dichtungsring bewirkt eine erhebliche Verringerung der Ausschaltzeit.

Durch das Kennzeichen des Anspruches 12 ist es in einfacher Weise möglich, das Einfallen der Bremse bei Ausfall der Spannung mit lediglich einer zentralen Schraubenfeder zu bewirken, die in sicherem Abstand von der Motorwelle geführt ist, was durch die zweiteilige Ausführung der Ankerscheibe hinsichtlich des damit verbundenen technischen Aufwandes begünstigt wird.

Der Gegenstand der Erfindung wird anhand eines in den Figuren dargestellten Ausführungsbeispiels näher erläutert. Es zeigen :

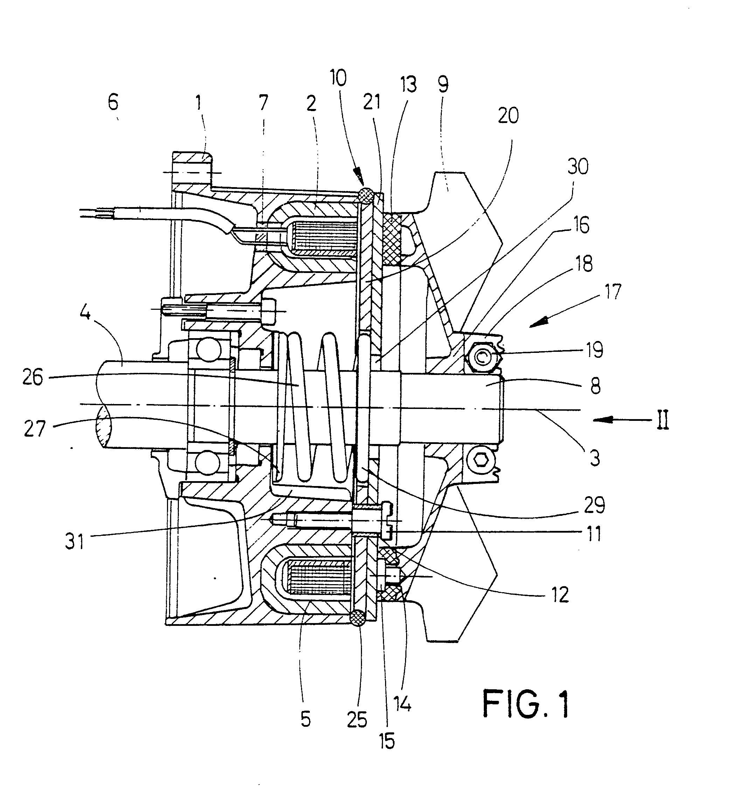

Figur 1 einen Vertikalschnitt durch das bremsseitige Lagerschild des Motors und dessen in das Lagerschild integrierte Bremse,

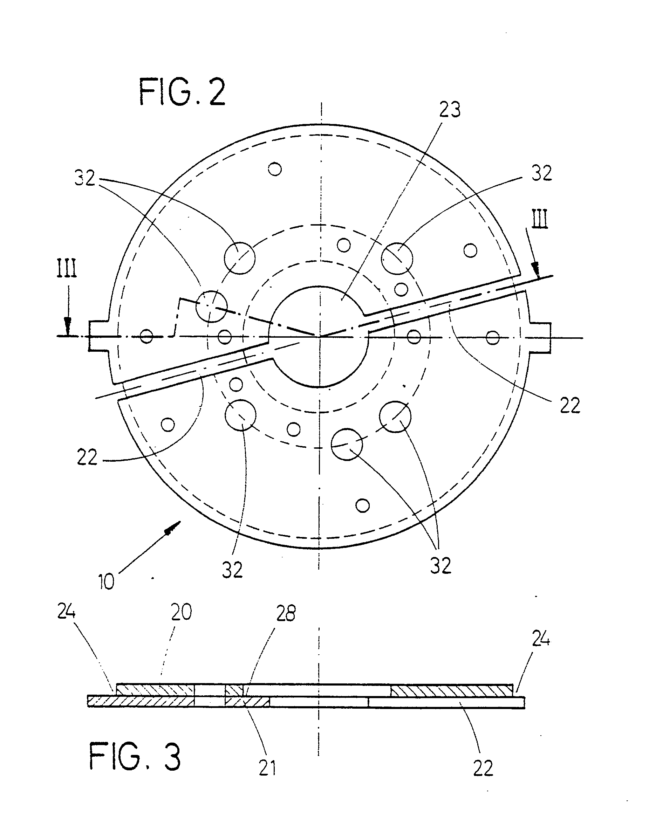

Figur 2 eine Draufsicht auf die Ankerscheibe entsprechend Pfeil II in Fig. 1,

Figur 3 einen Schnitt entsprechend der Linie III-III in Fig. 2.

Das rechte Lagerschild 1 des nicht näher dargestellten Scheibenbremsmotors ist aus Aluminiumdruckguß hergestellt. In das Lagerschild 1 ist ein in Form eines Weicheisenringes ausgebildeter Magnetkörper 2 eingebettet. Die Einbettung erfolgte mit dem Druckgußvorgang des Lagerschildes 1. Der ringförmig die Motorachse 3 bzw. die Motorwelle 4 umgebende Magnetkörper 2 dient zur Aufnahme der Bremsspule 5, deren elektrische Zuleitung 6 von der Seite des nicht näher dargestellten Scheibenbremsmotors her durch das Motorgehäuse und eine in das Lagerschild 1 eingesetzte Dichtscheibe 7 hindurch erfolgt. Auf das Ende 8 der Motorwelle 4 ist der Lüfter 9 aufgesetzt, welcher ebenfalls aus Aluminiumdruckguß hergestellt ist. Am Lagerschild 1 ist weiterhin eine insgesamt mit 10 bezeichnete Ankerscheibe in Axialrichtung (Motorachse 3) verschiebbar, jedoch undrehbar gelagert. Hierzu dienen mehrere gleichmäßig über den Umfang des Lagerschildes in dieses eingeschraubte Schrauben 11, die von einer Führungshülse 12 umgeben sind. Die Schrauben 11 bzw. deren Führungshülsen 12 durchsetzen die Ankerscheibe 10 und dienen zur Führung von deren axialer Verschiebebewegung. Zwischen Ankerscheibe 10 und Lüfter 9 ist ein ringförmig die Achse 3 umgebender Bremsbelag 13 wirksam. Der Bremsbelag 13 ist an mehreren gleichmäßig über den Umfang des Lüfters 9 verteilten Punkten auf dem Lüfter 9 aufgeheftet bzw. aufgedornt. Zu diesem Zweck sind auf einem zur Motorachse 3 koaxialen Kreis ringartige Vorsprünge 14 angeordnet, die in entsprechenden Durchgangslöcher 15 des Bremsbelages 13 angeordnet sind, wobei der Außenumfang der Vorsprünge 14 in radialer Richtung aufgedornt mit Haftsitz am Innenumfang der Durchgangslöcher 15 anliegt.

Die Nabe 16 des Lüfters 9 ist auf das Ende 8 der Motorwelle 4 aufgeklemmt. Hierzu ist die Nabe 16 als Klemmschelle 17 ausgebildet. Hierzu ist die Nabe 16 des Lüfters 9 in Radialrichtung geschlitzt (Schlitz 18). Der Schlitz 18 ist in Tangentialrichtung zur Umfangsrichtung der Motorwelle 4 von zwei Klemmschrauben 19 durchsetzt. Die Ankerscheibe 10 besteht aus zwei in Aneinanderlage miteinander verschweißten, nitrierten Stahlscheiben 20, 21, von denen die letztgenannte mit einem durchgehenden Radialschlitz 22 versehen ist. Der Radialschlitz 22 mündet in zwei einander diametral gegenüberliegende Umfangsbereiche der Durchtrittsöffnung 23 der Ankerscheibe 10 aus. Die dem Lagerschild 1 zugewandte Stahlscheibe 20 der Ankerscheibe 10 weist einen kleineren Durchmesser als die andere Scheibe 21 auf. In dem dadurch gebildeten Ringabsatz 24 liegt ein als O-Ring ausgebildeter Dichtungsring 25 aus elastischem Werkstoff, z. B. aus Gummi, ein.

Der Dichtungsring 25 überbrückt auch in bremsend den Lüfter 9 beaufschlagender Ankerscheiben-Axialstellung den Zwischenraum zwischen Lagerschild 1 und der Stahlscheibe 21 größeren Durchmessers. Die Ankerscheibe 10 wird von der die Motorwelle 4 umgebenden Druckfeder 26 in Axialrichtung beaufschlagt. Hierzu stützt sich die Druckfeder 26 mit ihrem motorseitigen Ende 27 am Lagerschild 1 ab. Mit ihrem anderen Ende 29 liegt die Druckfeder 26 in einer zentralen Ausnehmung 28 der dem Lagerschild 1 zugewandten Stahlscheibe 20 der Ankerscheibe 10 zentriert ein und stützt sich dort an der anderen Stahlscheibe 21 der Ankerscheibe 10 infolge des kleineren Durchmessers von deren zentraler Durchtrittsöffnung 30 ab.

Der Innendurchmesser der Druckfeder 26 ist größer als der Außendurchmesser der Motorwelle 4. Mit ihrem lagerschildseitigen Ende 27 liegt die Druckfeder 26 auf mehreren Lagerschildvorsprüngen 31 an und wird dadurch zentriert.

Die Scheibenbremse arbeitet wie folgt:

Mit dem Einschalten des nicht dargestellten Motors wird die Bremsspule 5 erregt. Über den Magnetkörper 2 wird die Ankerscheibe 10 schlagartig unter Kompression des Dichtungsringes 25 angezogen. Dadurch verliert die Ankerscheibe 10 ihren Kontakt mit dem Bremsbelag 13 des Lüfters 9. Die Motorwelle 4 kann dadurch ungehindert in Drehung versetzt werden.

Mit dem Abschalten des Motors erfolgt die Abschaltung der Erregung der Bremsspule 5. Der Magnetkörper 2 verliert seine auf die Ankerscheibe 10 einwirkende Magnetkraft. Diese wird schlagartig durch den Druck der komprimierten, als Schraubenfeder ausgebildeten Druckfeder 26 gegen den Bremsbelag 13 des Lüfters 9 gedrückt. Auf Grund ihrer drehfesten Lagerung (Schrauben 11 bzw. Führungshülsen 12 und zu deren Ausnahme bestimmte Durchgangslöcher 32) wird der in Drehung befindliche Lüfter 9 bis zum Stillstand abgebremst. Die Abbremsung des Lüfters 9 wird durch dessen als Klemmschelle 17 ausgebildete Nabe 16 auf die Motorwelle 4 übertragen, die nach Motorstillstand in abgebremster Stellung verharrt, bis der Motor wieder eingeschaltet wird und das vorgenannte Schaltspiel wieder beginnt.

**Patentansprüche**

1. Scheibenbremsmotor mit
einer im lüfterseitigen Lagerschild (1) einliegenden Bremsspule (5),
einem auf das freie Motorwellenende (8) aufgesetzten Lüfter (9) und
einer unter Federdruck gegen einen Teil der Innenseite des damit auch als Bremsscheibe wirksamen Lüfters (9) axial verschiebbar am Lagerschild (1) gelagerten Ankerscheibe (10), wobei zwischen Ankerscheibe (10) und Lüfter (9) ein vorzugsweise ringförmig ausgebildeter Bremsbelag (13) angeordnet ist, und das die Spule (5) umschließende Magneteisen als gesonderter Magnetkörper (2), z. B. als zur Motorwellenachse (3) koaxialer Weicheisenring, in das aus einem nichtmagnetischen Werkstoff bestehende Lagerschild (1) eingebettet ist, dadurch gekennzeichnet, daß das Lagerschild (1) aus Aluminium besteht und daß der Magnetkörper (2) durch Einbettung beim Druckgießen des Lagerschildes (1) haftschlüssig mit letzterem verbunden ist.

2. Motor nach Anspruch 1, dadurch gekennzeichnet, daß der Lüfter (9) aus Aluminium besteht und der Bremsbelag (13) am Lüfter (9) befestigt ist.

3. Motor nach Anspruch 2, dadurch gekennzeichnet, daß der Bremsbelag an wenigen, über den Umfang verteilten Punkten auf den Lüfter (9) aufgeheftet bzw. aufgedornt ist.

4. Motor nach Anspruch 2 oder 3, dadurch gekennzeichnet, daß auf einem zur Motorachse (3) koaxialen Kreis auf der Innenseite des Lüfters (9) ringartige Vorsprünge (14) zur Einlage in entsprechenden Durchgangslöchern (15) des Bremsbelages (13) angeordnet sind, wobei der Außenumfang der Vorsprünge (14) in radialer Richtung aufgedornt mit Haftsitz am Innenumfang der Durchgangslöcher (15) anliegt.

5. Motor nach einen der vorhergehenden Ansprüche, dadurch gekennzeichnet, daß die Nabe (16) des Lüfters (9) auf die Motorwelle (4) aufgeklemmt ist.

6. Motor nach Anspruch 5, dadurch gekennzeichnet, daß die Nabe (16) des Lüfters (9) als Klemmschelle ausgebildet ist.

7. Motor nach Anspruch 5 oder 6, dadurch gekennzeichnet, daß die Nabe (16) des Lüfters (9) mindestens teilweise in Radialrichtung geschlitzt ist, wobei der Schlitz (18) etwa in Tangentialrichtung zur Umfangsrichtung der Motorwelle (4) von zwei gegenüberliegenden Klemmschrauben (19) durchsetzt ist.

8. Motor nach einem der vorhergehenden Ansprüche, dadurch gekennzeichnet, daß die Ankerscheibe (10) aus mehreren, insbesondere aus zwei in Aufeinanderlage miteinander verschweißten, nitrierten Stahlscheiben (20, 21) besteht, von denen eine mit einem Radialschlitz (22) versehen ist.

9. Motor nach Anspruch 8, dadurch gekennzeichnet, daß der Radialschlitz (22) in zwei einander diametral gegenüberliegende Umfangsbereiche der Durchtrittsöffnung (23) der Ankerscheibe (10) durchgehend ausmündet.

10. Motor nach Anspruch 8 oder 9, dadurch gekennzeichnet, daß die dem Lagerschild (1) zugewandte Stahlscheibe (20) der Ankerscheibe (10) einen kleineren Durchmesser als die andere Stahlscheibe (21) aufweist und daß im dadurch gebildeten Ringabsatz (24) ein insbesondere als O-Ring ausgebildeter Distanzring (25) aus elastischem Werkstoff, z. B. aus Gummi, einliegt.

11. Motor nach Anspruch 10, dadurch gekennzeichnet, daß der Distanzring (25) auch in bremsend den Lüfter (9) beaufschlagender Ankerscheiben-Axialstellung den Zwischenraum zwischen Lagerschild (1) und der Stahlscheibe (21) größeren Durchmessers überbrückt.

12. Motor nach einem der Ansprüche 8-11, dadurch gekennzeichnet, daß die Ankerscheibe (10) von einer die Motorwelle (4) umgebenden Druckfeder (26), insbesondere Schraubendruckfeder, beaufschlagt ist, die sich mit einem Ende (27) am Lagerschild (1) abstützt und mit ihrem anderen Ende (29) in einer zentralen Ausnehmung (28) der dem Lagerschild (1) zugewandten Stahlscheibe (20) der Ankerscheibe (10) zentriert einliegt und sich dort an der anderen Stahlscheibe (21) der Ankerscheibe (10) abstützt.

13. Motor nach Anspruch 12, dadurch gekennzeichnet, daß der Innendurchmesser der Druckfeder (26) größer ist als der Außendurchmesser der Motorwelle (4).

14. Motor nach Anspruch 12 oder 13, dadurch gekennzeichnet, daß die Druckfeder (26) lagerschildseitig mit mehreren Lagerschildvorsprüngen (31) zentriert wird.

**Claims**

1. Disc brake actuator with
   a braking coil (5) mounted inside the end plate (1) which is situated on the fan side,
   a fan (9) fixed on the free end (8) of the actuator shaft and
   a rotor disc (10) mounted on the end plate (1), axially displaceable by spring pressure against part of the inside of the fan (9) which thus also acts as a brake disc, with
   a brake lining (13), preferably ring-shaped, being situated between the rotor disc (10) and the fan (9), and
   the magnet iron surrounding the coil (5) being embedded in the end plate (1) which consists of a non-magnetic material, in the form of a separate magnet body (2), e. g. a soft-iron ring that is co-axial to the axis (3) of the actuator shaft, characterized by the fact that the end plate (1) is made of aluminium and that the magnet body (2), upon diecasting of the end plate (1), is embedded and, therefore, firmly connected with the end plate through adhesion.

2. Actuator according to claim 1, characterized by the fact that the fan (9) is made of aluminium and the brake lining (13) is fixed on the fan (9).

3. Actuator according to claim 2, characterized by the fact that the brake lining is tacked or drifted onto the fan (9) at few points distributed over the circumference.

4. Actuator according to claim 2 or 3, characterized by the fact that a circle on the inside of the fan (9), which is co-axial to the axis (3) of the actuator, is provided with ring-shaped projections (14) to be inserted in the matching through holes (15) of the brake lining (13), with the outer circumferences of the projections (14) being drifted in radial direction and fitted into the inner circumferences of the through holes (15) with a wringing fit.

5. Actuator according to one of the preceding claims, characterized by the fact that the hub (16) of the fan (9) is clamped onto the actuator shaft (4).

6. Actuator according to claim 5, characterized by the fact that the hub (16) of the fan (9) is designed as a collar band.

7. Actuator according to claim 5 or 6, characterized by the fact that the hub (16) of the fan (9) is at least partially slotted in radial direction, with the slot (18) being penetrated by two opposite clamping screws (19) arranged in approximately tangential direction to the direction of the circumference of the actuator shaft (4).

8. Actuator according to one of the preceding claims, characterized by the fact that the rotor disc (10) consists of several nitrided steel discs (20, 21), in particular of two discs welded one on top of the other, one of which is provided with a radial slot (22).

9. Actuator according to one of the preceding claims, characterized by the fact that the radial through slot (22) ends in two diametrically opposite areas of the circumference of the opening (23) of penetration of the rotor disc (10).

10. Actuator according to claim 8 or 9, characterized by the fact that the steel disc (20) of the rotor disc (10) that faces the end plate (1) has a smaller diameter that the other steel disc (21) and that in the resulting ring-shaped step (24) a spacer ring (25), in particular designed as an O-ring, made of elastic material, e. g. of rubber, is inserted.

11. Actuator according to claim 10, characterized by the fact that the spacer ring (25) fills the space between the end plate (1) and the steel disc (21) with the larger diameter, even in the axial position of the rotor disc when the rotor disc has a braking effect on the fan (9).

12. Actuator according to one of the claims 8 to 11, characterized by the fact that a pressure spring (26) put around the actuator shaft (4), in particular a helical pressure spring, acts upon the rotor disc (10). One end (27) of this pressure spring is supported by the end plate (1) and its other end (29) is mounted centered in a central recess (28) of the steel disc (20) of the rotor disc (10) that faces the end plate (1), and is supported there by the other steel disc (21) of the rotor disc (10).

13. Actuator according to claim 12, characterized by the fact that the inside diameter of the pressure spring (26) is larger than the outside diameter of the actuator shaft (4).

14. Actuator according to claim 12 or 13, characterized by the fact that the pressure spring (26) is centered on its end plate side by several projections (31) of the end plate.

## Revendications

1. Moteur-frein à disque avec
une bobine de frein (5) montée dans le flasque (1) qui se trouve du côté du ventilateur,
un ventilateur (9) attaché sur l'extrémité libre (8) de l'arbre du moteur et
un disque-armature (10) monté axialement mobile sur le flasque (1) et applicable par pression de ressort contre une partie de la face interne du ventilateur (9), de sorte qu'il fait aussi fonction de disque de frein,
une garniture de frein (13), de préférence en forme annulaire, étant placée entre le disque-armature (10) et le ventilateur (9), et
le fer magnétique qui entoure la bobine (5) étant encastré dans le flasque (1), qui est fait d'un matériau amagnétique, en tant que corps magnétique séparé (2), par exemple en tant qu'anneau de fer doux coaxial à l'axe (3) de l'arbre de moteur, caractérisé par le fait que le flasque (1) est en aluminium et que le corps magnétique (2) est encastré lors de la coulée sous pression du flasque (1), de manière qu'il est fermement relié au flasque par adhésion.

2. Moteur selon la revendication 1, caractérisé par le fait que le ventilateur (9) est en aluminium et la garniture de frein (13) est fixée au ventilateur (9).

3. Moteur selon la revendication 2, caractérisé par le fait que la garniture de frein est pointée ou mandrinée sur le ventilateur (9) en quelques points répartis sur la circonférence.

4. Moteur selon la revendication 2 ou 3, caractérisé par le fait que les protubérances annulaires (14) à insérer dans des trous de passage (15) correspondants de la garniture de frein (13) sont disposées en un cercle coaxial à l'axe (3) du moteur sur la face interne du ventilateur, la circonférence extérieure des protubérances (14) étant mandrinées en direction radiale et adaptée dans la circonférence intérieure des trous de passage (15) à ajustement collant.

5. Moteur selon l'une des revendications précédentes, caractérisé par le fait que le moyeu (16) du ventilateur (9) est serré sur l'arbre de moteur (4).

6. Moteur selon la revendication 5, caractérisé par le fait que le moyeu (16) du ventilateur (9) est un collier de serrage.

7. Moteur selon la revendication 5 ou 6, caractérisé par le fait, que le moyeu (16) du ventilateur (9) est fendu au moins partiellement en direction radiale, la fente (18) étant traversée par deux vis de serrage (19) opposées, orientées à peu près tangentiellement à la circonférence de l'arbre de moteur (4).

8. Moteur selon l'une des revendications précédentes, caractérisé par le fait que le disque-armature (10) se compose de plusieurs disques en acier nitruré (20, 21), en particulier de deux disques superposés soudés l'un à l'autre, dont l'un est muni d'une fente radiale (22).

9. Moteur selon la revendication 8, caractérisé par le fait que la fente radiale traversante (22) débouche dans deux zones diamétralement opposées de la circonférence de l'ouverture de passage (23) du disque-armature (10).

10. Moteur selon la revendication 8 ou 9, caractérisé par le fait que le diamètre du disque en acier (20) du disque-armature (10), situé du côté du flasque (1), est plus petit que celui de l'autre disque en acier (21) et qu'un anneau d'écartement (25) en matériau élastique, par exemple en caoutchouc, en particulier en forme d'anneau torique, est placé dans le gradin annulaire (24) qui en résulte.

11. Moteur selon la revendication 10, caractérisé par le fait que l'anneau d'écartement (25) remplit l'espace entre le flasque (1) et le disque en acier (21) avec le diamètre plus grand, même lorsque le disque-armature occupe la position axiale où il exerce un effet de freinage sur le ventilateur (9).

12. Moteur selon l'une des revendications 8 à 11, caractérisé par le fait que le disque-armature (10) est chargé par un ressort à pression (26) qui entoure l'arbre de moteur (4), en particulier un ressort de compression hélicoïdal, qui s'appuie par une extrémité (27) sur le flasque (1) et par l'autre extrémité (29), disposée centrée dans un évidement central (28) du disque en acier (20) du disque-armature (10) situé du côté du flasque (1), sur l'autre disque en acier (21) du disque-armature (10).

13. Moteur selon la revendication 12, caractérisé par le fait que le diamètre intérieur du ressort à pression (26) est plus grand que le diamètre extérieur de l'arbre de moteur (4).

14. Moteur selon la revendication 12 ou 13, caractérisé par le fait que le ressort à pression (26) est centré du côté du flasque par plusieurs saillies (31) du flasque.

FIG. 1

FIG. 2

FIG. 3